Europäisches Patentamt

European Patent Office

Office européen des brevets

(11) Publication number: **0 322 160**
**A2**

## EUROPEAN PATENT APPLICATION

(21) Application number: 88311911.7

(51) Int. Cl.⁴: **H02G 15/04**

(22) Date of filing: 16.12.88

(30) Priority: 23.12.87 GB 8729937

(43) Date of publication of application:
28.06.89 Bulletin 89/26

(84) Designated Contracting States:
DE FR IT

(71) Applicant: **ASSOCIATED ELECTRICAL INDUSTRIES LIMITED**
1 Stanhope Gate
London W1A 1EH(GB)

(72) Inventor: **Rimmer, George Louis**
80 Vernon Road
Poynton Cheshire SK12 1YR(GB)

(74) Representative: **Maury, Richard Philip**
The General Electric Company p.l.c. G.E.C.
Patent Department (Wembley Office) Hirst
Research Centre East Lane
Wembley Middlesex HA9 7PP(GB)

(54) **Cable seals.**

(57) An end seal for a mineral insulated cable comprising a collar (1) of electrically insulating material which is a push fit over the end of the cable (4), and is closed at its outer end apart from one or more openings (5) for the passage of the conducting element or elements (3) of the cable, and a quantity of sealant (7) within the collar which serves to seal the end of the cable against moisture penetration.

FIG 1

## Cable Seals

This invention relates to end seals for electric cables of the kind comprising one or more conducting elements extending longitudinally within a metal sheath, and separated from it, and from each other if there are more than one, by powdered insulating material, for example magnesium oxide. Such cables are known generally as mineral insulated cables and will hereinafter be referred to as such.

One form of end seal for such cables which is in common use at the present time comprises a hollow cylindrical metal collar one end of which is arranged to be screwed on to the end of the metal sheath, the conducting element or elements projecting from the opposite end of the collar the interior of which is sealed by the introduction therein of a hardenable electrically insulating filler material, such as a thermosetting resin. In some cases the outer end of the collar is fitted with an electrically insulating insert for example of rubber or a rubber-like plastics material which effectively closes that end of the collar, the insert being provided with one or more openings for the passage of the conducting element or elements, each said opening commonly being surrounded at its outer end with an outwardly-projecting hollow stub through which the respective conducting element extends.

An object of the invention is to provide an alternative form of end seal for mineral insulated cables which has advantages over the known form of end seals as described above.

According to the invention, an end seal for a mineral insulated cable comprises a collar of electrically insulating material which is a push fit over the end of the cable, and is closed at its outer end apart from one or more openings for the passage of the conducting element or elements of the cable, and a quantity of sealant within the collar which serves to seal the end of the cable against moisture penetration.

The sealant may be an adhesive sealant for bonding the collar to the cable end. Alternatively, it may be a non-bonding sealant, such as an insulative grease, paste or resin.

The collar is preferably of resiliently deformable material, such as a silicone rubber, moulded to the required shape, and the sealant conveniently consists of a thermo-setting material such as a silicone rubber adhesive. Such a sealant can be introduced into the open end of the collar in a paste-like condition, prior to the fitting of the collar to the cable, and subsequently cured by the application of heat.

Each opening in the otherwise closed end of the collar may be surrounded at its outer end by a hollow stub through which the respective conductive element extends, the or each said stub conveniently being moulded integrally with the collar.

Such a stub and the adjacent part of the respective conductive element may be surrounded by a closely fitting sleeve, which may be formed of a suitable heat-shrinkable material.

Where earth continuity between the cable sheath and another conductor is required, the sheath may be fitted with a metal earthing collar, in electrical contact therewith, and the insulating collar provided with an opening extending longitudinally through its cylindrical wall for the passage of an earth tail conductor which can be soldered or otherwise connected electrically to the earthing collar.

An end seal in accordance with the invention has the advantage that it can be easily produced in different sizes to fit a wide variety of mineral insulated cables, the use of a resiliently deformable material for the insulating collar enabling it to accommodate wide tolerances in the external dimensions of cable sheaths. Moreover the seal is easier to fit than existing types of end seals utilising threaded metal collars, particularly those of the kind incorporating an insulating insert which needs to be held in place by crimping the outer edge of the collar over the insert. In addition, the seal does not rely on an oil based compound to maintain water-tightness, and is therefore more reliable and has wider application than standard forms of end seal.

A seal in accordance with the invention has the further advantage that the time needed to terminate a cable utilising the seal is greatly reduced compared with that required utilising conventional screw-on seals, so that the installation costs are lower and, as no specialised tools are required, the terminating process can be carried out by less widely trained personnel.

It will be appreciated that the dimensions of the collar, and the number, position and size of the openings for the passage of the cable conductors, can readily be selected to suit the cable which the seal is required to terminate.

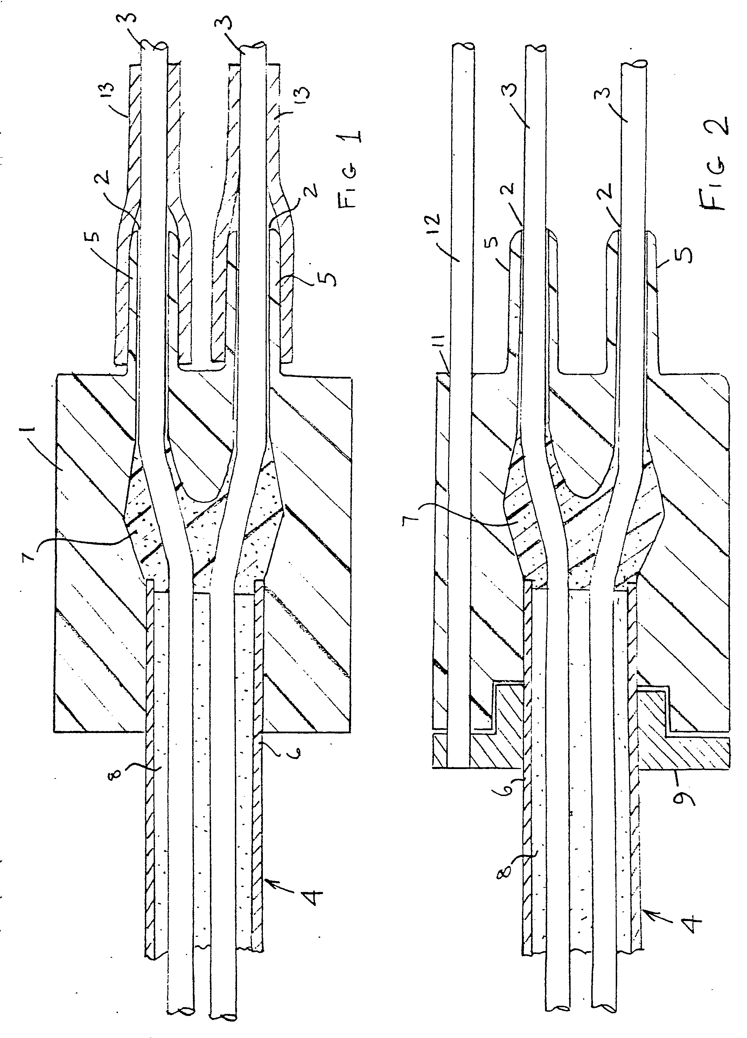

Two end seals in accordance with the invention will now be described by way of example with reference to Figures 1 and 2 of the accompanying schematic drawing which represents axial sections through the ends of two mineral insulated cables terminated by the seals.

The seal shown in Figure 1 comprises a hollow cylindrical collar 1 of moulded silicone rubber, closed at one end apart from openings 2 for the passage therethrough of the conductors 3 of a mineral insulated cable 4, the openings being surrounded externally by longitudinally-projecting tubular stubs 5 moulded integrally with the collar. The number of openings 2 will depend upon the number of conductors within the cable with which the seal is designed to be used, and in the figures the cable 4 is shown with two such conductors, the collar in this case similarly having two openings 2.

The collar 1 is arranged to be a push fit over the sheath 6 at the end of the cable to be sealed, the conductors 3 being guided through the respective openings 2 and stubs 5, and an adhesive silicone rubber sealant 7, previously deposited, within the hollow interior of the collar 1, is allowed to harden, bonding the collar to the end of the cable 4 and at the same time sealing it against the ingress of moisture into the powdered insulating material 8, usually magnesium oxide, which surrounds the conductors 3.

If earth continuity is required between the cable sheath 6 and another electrical conductor, the sheath is conveniently fitted, as shown in Figure 2, with a metal earthing collar 9 placed on to the sheath before the collar 1, and in good electrical contact with the sheath, for example by being soldered to it. The collar 1 in this case is provided with a hole 11 extending longitudinally through its cylindrical wall, and the collar is fitted to the sheath with the hole 11 aligned with a co-operating hole in the earthing collar 9. An earth tail conductor 12 is then inserted through the aligned holes and soldered to the earthing collar 9.

In both embodiments the tubular stubs 5 may be fitted with insulating sleeves 13 which extend for a short distance along the projecting cable conductors 3, as shown in Figure 1, such sleeves conveniently being formed of a heat-shrinkable material.

The material used to form the collar 1 may be any appropriate elastomeric or thermoplastic material, and it may be affixed to the cable end by exclusively mechanical means, without the need for a bonding medium. Thus, instead of the adhesive sealant 7, the collar 1 could contain insulative greases, pastes or resins, with properties appropriate to the duty for which the collar is supplied. The grease could be a high viscosity, non-setting grease.

It will be seen that as the collar 1 is merely pushed on to the end of the cable sheath, the time needed to terminate a cable is much less than that required to fit metal screw-on seals, and the operation can be carried out by relatively unskilled personnel, thus leading to a reduction in the installation costs.

## Claims

1. An end seal for a mineral insulated cable comprising a collar (1) of electrically insulating material which is a push fit over the end of the cable (4), and is closed at its outer end apart from one or more openings (5) for the passage of the conducting element or elements (3) of the cable, and a quantity of sealant (7) within the collar which serves to seal the end of the cable against moisture penetration.

2. An end seal according to Claim 1, in which the sealant is an adhesive sealant.

3. An end seal according to Claim 2, in which the sealant is a thermo-setting material.

4. An end seal according to Claim 1, in which the sealant is a non-bonding sealant.

5. An end seal according to any preceding Claim, in which the collar is of resiliently deformable material.

6. An end seal according to any preceding Claim, in which each opening in the otherwise closed end of the collar is surrounded at its outer end by a hollow stub (5) through which the respective conductive element extends.

7. An end seal according to Claim 6, in which the or each stub (5) is moulded integrally with the collar.

8. An end seal according to Claim 6 or 7, in which the adjacent part of the respective conductive element is surrounded by a closely fitting sleeve (13).

9. An end seal according to any preceding Claim, in which the cable sheath (6) is fitted with a metal earthing collar (9), in electrical contact therewith, and the insulating collar has an opening (11) extending longitudinally through its cylindrical wall for the passage of an earth tail conductor.

FIG 1

FIG 2

EP 0 322 160 A2